# EUROPÄISCHE PATENTSCHRIFT

(11) **EP 2 227 947 B1**
(45) Veröffentlichungstag und Bekanntmachung des Hinweises auf die Patenterteilung: **02.10.2013**
(21) Anmeldenummer: 10450037.6
(22) Anmeldetag: 10.03.2010
(51) Int. Cl.: A01K 47/00, A01K 47/02

(54) **Magazinbeute**
Beehive body
Corps de ruche

(30) Priorität: 13.03.2009 AT 15009 U
(43) Veröffentlichungstag der Anmeldung: 15.09.2010
(73) Patentinhaber: König, Franz, 7561 Heiligenkreuz i. L. (AT)
(72) Erfinder: König, Franz, 7561 Heiligenkreuz i. L. (AT)
(74) Vertreter: Cunow, Gerda

(56) Entgegenhaltungen:
- EP-A1- 0 671 122
- WO-A1-2006/103384
- DE-B- 1 162 128
- DE-C- 630 803
- DE-C- 874 383
- DE-C- 919 565
- US-A- 457 550
- US-A- 3 105 977

## Beschreibung

Die vorliegende Erfindung bezieht sich auf eine Magazinbeute mit mehreren übereinander anordenbaren, einen Brutraum und/oder Honigraum umgebenden, unten und oben offenen Zargen zur Aufnahme einer Mehrzahl von Rahmen sowie wenigstens einem Deckel und einem Boden mit einem darin angeordneten Flugloch, wobei die oben und unten offenen Zargen an einer Seite öffen- oder schließbar ausgebildet sind und im Inneren jeder Zarge an beiden Seitenflächen jeweils wenigstens eine Führung vorgesehen ist, welche jeweils wenigstens eine Führung mit einem dazu komplementären Auszugselement, in welches die Rahmen einhängbar sind, zusammenwirkt.

Bienenbehausungen bzw. -beuten existieren seit unzähligen Jahren in den verschiedensten Ausführungen, wobei viele seit Alters her bekannte Bienenstöcke bzw. -beuten aufgrund des großen Honigverlustes, welcher beim Entnehmen des Honigs aus derartigen Stöcken bzw. Beuten erlitten wird, nachteilig sind, wie beispielsweise hohle Baumstämme, Bienenkörbe oder dgl. Derartige Bienenstöcke haben den weiteren Nachteil, dass in ihnen ein starrer Wabenbau ausgeführt wurde bzw. wird, welcher starre Wabenbau jedes Mal zum Entnehmen des Honigs zerstört werden muss.

Eine Verbesserung und insbesondere ein bedeutend geringerer Honigverlust konnte mit einem Wabenbau in beweglichen Holzrahmen erzielt werden, welche Holzrahmen aus der Bienenbeute einzeln entnommen werden können, so dass nach Entnahme des Honigs diese Rahmen wieder in die Beute zurückgehängt werden können.

Nachdem diese beweglichen Rahmen entwickelt wurden, wurden Bienenkästen bzw. Bienenhäuser aus Holz entwickelt, wobei insbesondere zwei verschiedene Arten von Beuten zum Einsatz gelangten. Bequem zugänglich ist eine sogenannte Hinterbehandlungsbeute, bei welcher die Rahmen nach Öffnen einer am Bienenhaus festgelegter Größe angeordneten Türe einzeln aus den entsprechend dafür vorgesehenen Schränken festgelegter Größe entnommen werden konnten. Nachteilig bei derartigen Hinterbehandlungsbeuten, in welchen Schränke, in denen die Rahmen eingehängt wurden, zur Anwendung gelangen, ist, dass sie nicht erweitert werden können und für insbesondere sich vergrößernde Völker üblicherweise zu klein sind oder auch im Laufe des Jahres zu klein werden. Des Weiteren ist bei derartigen Hinterbehandlungsbeuten die Möglichkeit, die Bienen zu füttern, schlecht. Schließlich sind derartige Hinterbehandlungsbeuten auch für das heute häufig auftretende Problem, dass die Bienen gegen Varroose behandelt werden müssen, schlecht einsetzbar.

In der DE 78 30 239 U ist eine weiterentwickelte Form einer Hinterbehandlungsbeute beschrieben, bei welcher jeweils übereinander angeordnete Beutekästen aus der Beute herausziehbar angeordnet sind, wobei bei einer derartigen Beute jedoch keinerlei Möglichkeiten einer Erweiterung für das Bienenvolk gegeben ist.

Aus diesem Grund werden seit längerem sogenannte Oberbehandlungsbeuten und insbesondere die extrem flexiblen Magazinbeuten zum Einsatz gebracht. Eine Magazinbeute besteht üblicherweise aus einer Mehrzahl von oben und unten offenen Holz- bzw. Kunststoffkisten, den sogenannten Zargen, in welche von oben die Rahmen eingehängt werden. Eine Magazinbeute wird dadurch aufgebaut, dass diese Mehrzahl von derartigen Zargen übereinander gestapelt wird und mit einem Deckel abgeschlossen wird. Darüber hinaus wird unter den Zargen ein Bodenelement zum Einsatz gebracht, welches Bodenelement auch das Flugloch aufweist. Je nach Größe des Bienenvolkes können Magazinbeuten mit einer bis vier oder sogar fünf Zargen pro Volk und Beute zum Einsatz gelangen. Der Vorteil derartiger Magazinbeuten ist, dass bei Bedarf jederzeit eine weitere Zarge in die Magazinbeute eingebracht werden kann bzw. entnommen werden kann, wodurch auf die Erfordernisse der Stärke des Bienenvolkes Rücksicht genommen werden kann. Nachteilig bei derartigen Magazinbeuten ist, dass insbesondere während des Schwärmens der Bienen im Frühjahr die Beuten häufig kontrolliert werden müssen und für diese Kontrolle üblicherweise die Honigmagazine, als welche die oberen Zargen der Magazinbeute ausgebildet sind, per Hand von der Magazinbeute abgehoben werden müssen, um die darunter liegende Zarge, das sogenannte Brutmagazin, zu kontrollieren. Ein derartiges Honigmagazin wiegt mit eingesetztem Rahmen üblicherweise etwa 30 kg, so dass allein die Kontrollarbeit, welche im Frühjahr durch den Imker durchzuführen ist, als körperliche Schwerarbeit zu werten ist.

Der EP 0 671 122 A1 ist eine stapelbare Magazinbeute entnehmbar, bei welcher Wabenrahmen in einen Auszugsrahmen einhängbar sind, um gemeinsam mit dem Rahmen aus der Magazinbeute herausgezogen zu werden.

Der DE 874 383 C ist eine Oberbehandlungsbeute entnehmbar, bei welcher die einzelnen Beutekästen als schubladenförmige aus der Beute herausziehbare Elemente ausgebildet sind. Eine ähnliche Konstruktion ist der WO 2006/103384 A1 entnehmbar, bei welcher ein schubladenförmiges Element aus einer Oberbehandlungsbeute ausziehbar ausgebildet ist.

Die vorliegende Erfindung zielt nun darauf ab, eine Magazinbeute zur Verfügung zu stellen, bei welcher sämtliche Zargen einfach und sicher zugänglich sind, ohne dass sie von dem Magazin abgehoben werden müssen.

Zur Lösung dieser Aufgabe ist die Magazinbeute, bei welcher die oben und unten offenen Zargen an einer Seite öffenoder schließbar ausgebildet sind und bei welcher im Inneren jeder Zarge an beiden Seitenflächen jeweils wenigstens eine Führung vorgesehen ist, welche jeweils wenigstens eine Führung mit einem dazu komplementären Auszugselement, in welches die Rahmen einhängbar sind, zusammenwirkt, gemäß der vorliegenden Erfindung im Wesentlichen dadurch gekennzeichnet, dass das Auszugselement im Wesentlichen trog- bzw. wannenförmig ausgebildet ist, dessen Seitenwände und/oder Deckfläche offen ausgebildet sind und dessen freie Oberkanten als mit in der Zarge ausgebildeten Führungen gleitend zusammenwirkende Auflagerschienen ausgebildet sind, dass das Auszugselement zusätzlich wenigstens an seiner der Öffen- und Schließvorrichtung gegenüberliegenden Oberkante mit einem zum Inneren der Zarge gerichteten, im Wesentlichen L-förmigen Versteifungs- bzw. Auflagerelement versehen ist, dass auf den im Wesentlichen L-förmigen Auflagerelementen bzw. -schienen in regelmäßigen Abständen Abstandhalter und/oder Anschlagelemente ausbildet sind und dass die Zarge, das Auszugselement sowie die Mehrzahl von Rahmen im Bienenabstand zueinander angeordnet sind. Dadurch, dass die oben und unten offenen Zargen an einer Seite öffen- oder schließbar ausgebildet sind, gelingt es, zu jeder Zarge unabhängig von dem gesamten Magazin zuzugreifen bzw. Zugang zu haben und das Innere der Zarge zu überprüfen bzw. zu kontrollieren. Indem, wie dies weiters der vorliegenden Erfindung entspricht, im Inneren jeder Zarge an beiden Seitenflächen jeweils wenigstens eine Führung vorgesehen ist, welche jeweils wenigstens eine Führung mit einem dazu komplementären Auszugselement, in welches die Rahmen einhängbar sind, zusammenwirkt, gelingt es überdies, das Innere der Zarge, insbesondere die Rahmen gemeinsam mit dem Auszugselement aus der Zarge herauszuziehen und somit die Rahmen einzeln aus der Zarge zu entnehmen, ohne dass die gesamte schwere Zarge von der Magazinbeute abgehoben werden muss. Durch diesen einfachen Zugang zu dem Inneren der Zarge wird nicht nur die Arbeit des Imkers bei der Entnahme von Honig erleichtert und gleichzeitig das Schwärmen der Bienen verhindert, sondern es kann zusätzlich auch der Gesundheitszustand, z.B. ein Befall mit der Varroa-Milbe oder den kleinen oder großen Beutenkäfer bzw. Fütterungszustand der Bienen einfach und zuverlässig behandelt oder überprüft werden.

Durch Ausbildung der Magazinbeute derart, dass das Auszugselement im Wesentlichen trog- bzw. wannenförmig ausgebildet ist, dessen freie Oberkanten als mit in der Zarge ausgebildeten Führungen gleitend zusammenwirkende Auflager ausgebildet sind, kann das Auszugselement im Wesentlichen nach Art einer Schublade aus der Zarge herausgezogen werden bzw. in diese eingeschoben werden, ohne dass es zu ruckartigen Bewegungen des Auszugselements kommt und ohne dass die Gefahr einer Verletzung von Bienen aufgrund des Nichteinhaltens des Bienenabstands kommen kann. Indem das Auszugselement zusätzlich wenigstens an seiner der Öffen- und Schließvorrichtung gegenüberliegenden Oberkante mit einer zum Inneren der Zarge gerichteten, im Wesentlichen L-förmigen Versteifungs- bzw. Auflagerschiene versehen ist, wird einerseits sichergestellt, dass das Auszugselement bei seiner Betätigung nicht asynchron in den beiden dafür vorgesehenen Führungen läuft und es somit zu einem Verklemmen bzw. unbeabsichtigten Bewegen der Rahmen kommt, und andererseits sichergestellt, dass eine derartig ausgebildete Magazinbeute auch zum Einsatz für den Kaltbau geeignet ist. Durch das Vorsehen von wenigstens an seiner der Öffen- und Schließvorrichtung gegenüberliegenden Oberkante einer zum Inneren der Zarge gerichteten, im Wesentlichen L-förmigen Versteifungs- bzw. Auflagerschiene kann bei Kaltbau, d.h. Einsatz der Rahmen in Einflugrichtung der Bienen, der Rahmen an wenigstens einer Oberkante sicher und zuverlässig abgestützt bzw. eingehängt werden, so dass bei Vorsehen von nur einer L-förmigen Versteifungs- bzw. Auflagerschiene der Rahmen beispielsweise an der Unterseite abgestützt werden muss bzw. er bei Vorsehen von zwei derartigen L-förmigen Versteifungsschienen ebenso wie beim Warmbau einfach in das trog- bzw. wannenförmige Auszugselement eingehängt werden kann.

Um auch bei Bewegung des Auszugselements ein Verschwenken bzw. jede unbeabsichtigte Bewegung der Rahmen in der Zarge bzw. den L-förmigen Auflagerschienen mit Sicherheit hintanzuhalten, sind erfindungsgemäß auf den im Wesentlichen L-förmigen Auflagerschienen in regelmäßigen Abständen Abstandhalter- und/oder Anschlagelemente ausgebildet. Durch derartige in regelmäßigen Abständen ausgebildete Abstandhalterelemente können die Rahmen auf die L-förmigen Auflagerschienen aufgelegt werden bzw. dort eingehängt werden, wobei gleichzeitig der Bienenabstand zwischen den einzelnen Rahmen durch den Abstand zwischen den Abstandhaltern automatisch vorgegeben ist. Mit einer derartigen Konstruktion wird auch ungeübten Imkern bzw. Anfängern die Möglichkeit geboten, sicher und zuverlässig seinem Bienenvolk die bestmöglichen Lebensbedingungen zu bieten und gleichzeitig eine einfache Zugangsmöglichkeit zu dem Inneren der Zarge einer Magazinbeute zur Verfügung gestellt.

Indem, wie dies einer Weiterbildung der Erfindung entspricht, die oben und unten offenen Zargen an ihrer dem Flugloch gegenüberliegenden Rückseite oder der dem Flugloch benachbarten Vorderseite öffen- und schließbar ausgebildet sind, wird sichergestellt, dass auch bei Aufbau einer Vielzahl von Magazinbeuten nebeneinander ein sicherer Zugang zu dem Honig- bzw. Brutraum der einzelnen Magazine gewährleistet wird. In diesem Zusammenhang ist festzuhalten, dass der Zugang zu den einzelnen Zargen von der von dem Flugloch abgewandten Seite, d.h. von rückwärts, prinzipiell günstiger ist, da dadurch Störungen der Bienenvölker durch Öffnen und Entnehmen der einzelnen Rahmen bedeutend geringer ausfallen als bei Öffnen des Magazins auf der Seite des Flugloches.

Ein weiterer Vorteil einer von rückwärts zu verschließenden Zarge ist, dass diese beispielsweise auch als Halbzarge ausgebildet sein kann, d.h. als eine Zarge mit halber Bauhöhe, welche Halbzarge als Wilddrohnenbaulade einsetzbar ist. Bei einer derartigen Ausbildung wird sichergestellt, dass der sich üblicherweise im unteren Teil der Beute befindliche Drohnenbau einen eigenen, ausschließlich dafür zur Verfügung gestellten Platz erhält, so dass der Drohnenbau, welcher für die Honiggewinnung nicht erforderlich ist, einfach und zuverlässig aus der Beute entfernt werden kann, indem einfach der Inhalt der untersten Halbzarge, welche sich direkt über dem Einflugloch befindet, entnommen und verworfen wird. Darüber hinaus hat der Einsatz einer derartigen Halbzarge den Vorteil, dass der üblicherweise im unteren Teil der Magazinbeute auftretende Schädlingsbefall ohne Einsatz von chemischen Mitteln sicher und zuverlässig aus der Magazinbeute einfach durch Verwerfen des Inhalts der Wilddrohnenbaulade bekämpft werden kann. Mit einer derartigen zusätzlichen Halbzarge kann der Varroa-Milbenbefall ebenso wie der Befall mit dem kleinen oder großen Beutenkäfer sicher und zuverlässig hintangehalten werden.

Indem die Magazinbeute so ausgebildet wird, dass die jeweils wenigstens eine Führung beidseitig im oberen Endbereich der Zarge, insbesondere in Abstand von 8 bis 30 mm von der Oberkante der Zarge, ausgebildet ist, wird einerseits sichergestellt, dass das Auszugselement sicher und zuverlässig durch den Imker ergriffen werden kann und aus der Zarge herausgeführt bzw. in die Zarge eingeschoben werden kann, und überdies ist durch eine derartige Ausbildung sichergestellt, dass der sogenannte Bienenabstand bzw. Beespace auch im Hinblick zur Oberkante der Zarge eingehalten wird, wodurch sowohl ein wildes Verbauen eines zu großen Hohlraums als auch eine Verletzung oder gar Tötung von Bienen aufgrund eines zu kleinen Abstands vermieden wird. Darüber hinaus können bei einer derartigen Ausbildung im oberen bzw. unteren Bereich oder auch beiden Bereichen der Zarge Querverstrebungen angebracht werden, wodurch die Gesamtstabilität der öffenbaren Zarge verbessert werden kann und insbesondere ein Verziehen bzw. Verwinden der Zarge im geöffneten Zustand mit Sicherheit hintangehalten werden kann.

Um eine sichere Auflage der einzelnen Rahmen auf dem Auszugselement zu gewährleisten, ist die Erfindung dahingehend weitergebildet, dass die mit den Führungen gleitend zusammenwirkenden Oberkanten des Auszugselements zum Inneren der Zarge im Wesentlichen als L-förmige Auflagerschienen ausgebildet sind. Eine derartige Ausbildung des Auszugselements ist insbesondere für den Warmbau geeignet, in welchem die Rahmen quer zur Einflugrichtung der Bienen in die Zarge bzw. im Fall der vorliegenden Erfindung in das Auszugselement eingehängt werden.

Durch die L-förmige Ausbildung können auch einzelne Rahmen waagrecht herausgezogen werden, ohne den gesamten Inhalt bewegen zu müssen.

Um insbesondere eine sichere Positionshaltung der Rahmen in den Auflagerschienen zu gewährleisten und vor allem ein Durchsacken mit Sicherheit hintanzuhalten, ist die Erfindung dahingehend weitergebildet, dass die im Wesentlichen L-förmige Versteifungs- bzw. Auflagerschiene an ihrer zur Zarge gerichteten Seite mit wenigstens einem sich waagrecht erstreckenden Fortsatz versehen ist, welcher Fortsatz in eine komplementäre Vertiefung in der Zarge eingreift oder auf einem an der Innenseite der Zarge ausgebildeten Halteelement aufliegt. Durch einen derartigen, sich waagrecht erstreckenden Fortsatz an der Auflagerschiene, welcher in eine Vertiefung oder ein Auflager der Zarge eingreift bzw. darauf aufliegt, wird sichergestellt, dass der Bienenabstand im Inneren der Zarge überall eingehalten wird und es somit zu keinen Verletzungen oder keiner Beschädigung der Tiere insbesondere bei Kaltbau in der Magazinbeute kommt.

Dadurch, dass die in dem im Wesentlichen trog- bzw. wannenförmigen Auszugselement angeordneten, der Unterseite der Zarge benachbarten Elemente als zum Inneren der Zarge gerichtete, im Wesentlichen L-förmige Elemente ausgebildet sind, gelingt es, an den zu der Unterseite der Zarge gerichteten Teilen des Auszugselements Auflagerflächen für die Rahmen zur Verfügung zu stellen, so dass einerseits ein Verschwenken bzw. unbeabsichtigtes Bewegen der einzelnen Rahmen in dem Auszugselement und andererseits ein Herunterfallen derselben mit Sicherheit vermieden werden kann.

Indem, wie dies einer bevorzugten Weiterbildung der Erfindung entspricht, an den der Unterseite der Zarge benachbarten, im Wesentlichen L-förmigen Elementen in regelmäßigen Abständen jeweils nach oben gerichtete Auflager ausgebildet sind, kann die Auflagerfläche des Rahmens in dem Auszugselement weiter verringert werden, so dass eine Verletzung von Bienen beim Einsetzen von einzelnen Rahmen in das Auszugselement so weit wie möglich vermieden wird.

Indem, wie dies einer bevorzugten Weiterbildung der Erfindung entspricht, die Auflager als linienförmige Auflager, insbesondere Spitzen, ausgebildet sind, wird nicht nur die Auflagerfläche so klein wie möglich gestaltet, sondern zusätzlich auch ein gewisses Eindringen des Auflagerelements in den Rahmen sichergestellt, wodurch eine Bewegung bzw. Verschiebung des Rahmens gegenüber dem Untergrund bzw. dem L-förmigen Element mit Sicherheit hintangehalten wird, so dass eine Verschlechterung bzw. Verringerung der Honigausbeute bzw. eine Beeinträchtigung des Bienenabstands zwischen den Rahmen mit Sicherheit vermieden werden kann. Darüber hinaus kann mit einer derartigen Ausbildung beispielsweise beim Kaltbau mit einer einseitigen Lagerung des Rahmens an der Oberseite des Auszugselements das Auslangen gefunden werden, wenn sichergestellt ist, dass an der sich an dem oberen Rand der Zarge befindlichen Auflagerfläche für den Rahmen gegenüberliegenden Unterseite ein derartiges Auflager befindet, so dass der Rahmen prinzipiell an zwei Punkten festgelegt ist, wodurch eine ausreichende Festigkeit des Rahmens in der Zarge gewährleistet wird.

Zur weiteren Verbesserung der Stabilität kann beispielsweise im Inneren des öffen- und schließbaren Zargenelements eine weitere Auflagerschiene für die Rahmen ausgebildet sein.

Um einen besonders sicheren Halt der Rahmen in dem trog- bzw. wannenförmigen Element zu gewährleisten, kann die Erfindung bevorzugt dahingehend weitergebildet sein, dass die Abstandhalter der im oberen Bereich der Zarge angeordneten Auflagerschienen und die linienförmigen Auflager der der Unterseite der Zarge benachbarten, im Wesentlichen L-förmigen Auflagerschienen versetzt zueinander, insbesondere jeweils um die Hälfte des Abstands von jeweils zwei Anschlag- bzw. Auflagerflächen versetzt zueinander, angeordnet sind. Mit einer derartigen Anordnung kann nicht nur gewährleistet werden, dass der Bienenabstand ausreichend eingehalten wird, sondern darüber hinaus auch sichergestellt werden, dass ein unbeabsichtigtes Verschwenken bzw. Verschieben der Rahmen im Inneren des Magazins mit Sicherheit hintangehalten wird.

Mit einer derartigen Ausbildung kann beispielsweise auch jeder einzelne einzuhängende Rahmen insbesondere schmal ausgebildet sein, da durch das Vorsehen der Abstandhalter und der Auflagerfläche automatisch die richtige Position für das Einsetzen der einzelnen Rahmen gefunden wird und der Bienenabstand sicher und zuverlässig eingehalten werden kann.

Um die Gefährdung für die Bienen durch das in der Zarge verschiebliche Auszugselement so gering wie möglich zu halten, kann die Erfindung bevorzugt dahingehend weitergebildet sein, dass das im Wesentlichen trog- oder wannenförmige Auszugselement lediglich an einer Oberkante und/oder an einer Unterkante mit einer quer verlaufenden Auflagerschiene versehen ist. Mit einer derartigen Ausbildung kann einerseits ein ausreichend stabiles Auszugselement zur Verfügung gestellt werden und andererseits die Verletzungsgefahr für die Bienen durch das verschiebbare Auszugselement so gering wie möglich gehalten werden.

Wesentlich bei der vorliegenden Erfindung ist, dass die Rahmen sowohl wie bisher nach oben herausgenommen werden als auch waagrecht herausgezogen werden können. Entweder wird der gesamte Inhalt der Zarge herausgezogen, um anschließend die einzelnen Rahmen dann nach oben herauszunehmen, oder es kann auch nur ein einzelner Rahmen nach oben in Fall des Warmbaus oder waagrecht im Fall des Kaltbaus herausgenommen oder getauscht werden. Des weiteren kommt beim Fütterungsaufsatz ein Rundumaufstieg mit Bienenabdeckung (durchsichtig) hinzu.

Selbstverständlich weist bei einer derartigen Magazinbeute weiters jede Zarge entsprechende Griffelemente zum Abheben der Zarge von der Magazinbeute auf, um beispielsweise Reinigungsarbeiten, Stapelarbeiten, Hinzufügen einer neuen Zarge auf das Magazin bzw. Entfernen einer schadhaften Zarge einfach und zuverlässig zu ermöglichen. Ein derartiges Griffelement kann beispielsweise als umlaufendes Griffelement ausgebildet sein, welches auch gegebenenfalls abschwenkbar ausgebildet sein kann und auch mit einer Abstützung versehen sein kann, so dass beispielsweise durch Abschwenken eines derartigen Griffelements auch eine Aufhängevorrichtung für einzelne Rahmen während der Bearbeitung außerhalb der Zarge zur Verfügung gestellt werden kann.

Schließlich kann bzw. wird jede Öffen- bzw. Schließvorrichtung jeder einzelnen Zarge mit einem beliebig auszubildenden Verschlusselement ausgestattet sein, um ein unbeabsichtigtes Öffnen der Zarge mit Sicherheit zu vermeiden.

Indem, wie dies einer bevorzugten Weiterbildung der Erfindung entspricht, die der öffen- und schließbaren Seite benachbarten Seitenwände der Zarge doppelwandig ausgebildet sind und die zum Inneren der Zarge gerichtete Wand wenigstens eine insbesondere verschließbare Durchbrechung aufweist, kann einerseits in dem zwischen der doppelwandigen Ausbildung der Zarge ausgebildeten Hohlraum ein Wärmedämmelement eingesetzt werden, wodurch beispielsweise eine Überhitzung des Inneren des Bienenstockes mit Sicherheit vermieden werden kann. Um eine derartige Überhitzung festzustellen, kann beispielsweise im Inneren des Bienenstockes ein herkömmliches Thermometer, ein Temperaturmessfühler oder dgl. angebracht werden, welcher insbesondere so ausgerichtet ist, dass die Ablesevorrichtung zu der Öffen- bzw. Schließvorrichtung gerichtet ist, um ein sicheres, schnelles und zuverlässiges Ablesen des Thermometers sicherzustellen.

Gemäß einer bevorzugten Weiterbildung der Erfindung kann der zwischen der doppelten Wand der Zarge ausgebildete Hohlraum so genutzt werden, dass in wenigstens einer der doppelwandig ausgebildeten Seitenwände eine in ihren Außenabmessungen einem Rahmen entsprechende Futtertasche einsetzbar ist. Indem in wenigstens eine der doppelwandig ausgebildeten Seitenwände eine in ihren Außenabmessungen einem Rahmen entsprechende Futtertasche einsetzbar ist, kann zusätzlich in der Zarge ein Futterreservoir, welches für die Bienen leicht von innen zugänglich ist, zur Verfügung gestellt werden. Eine derartige Futtertasche ist hiebei so ausgebildet, dass die Entnahmeöffnung für das Futter mit wenigstens der insbesondere verschließbaren Durchbrechung der zum Inneren der Zarge gerichteten Wand übereinstimmt, so dass die Tiere unmittelbar und ohne jede Beeinträchtigung Futter aus der Futtertasche entnehmen können. Darüber hinaus kann bei der doppelwandigen Ausbildung der Zarge in der Außenwand der Zarge beispielsweise ein öffen- und verschließbares Fenster bzw. eine Zugangsöffnung angebracht sein, so dass direkt von außen Futter, insbesondere Flüssigfutter, in die Futtertasche eingebracht werden kann und auch die Restfuttermenge, welche sich in der Futtertasche befindet, überprüft werden kann. Darüber hinaus kann das Sichtfenster in der Futtertasche selbst ausgebildet sein und beispielsweise von der Seite der Öffen- und Schließvorrichtung zugänglich sein, von welcher Seite beispielsweise auch die gesamte Futtertasche aus der Zarge entnehmbar ist, so dass der Austausch bzw. Ersatz einer gesamten Futtertasche ebenso wie der Zutritt zu dem Rahmen in der Zarge unmittelbar durch Öffnen und Schließen der Öffen- bzw. Schließvorrichtung ermöglicht wird.

Darüber hinaus kann die Zarge so weitergebildet sein, dass zwischen der Öffen- und Schließvorrichtung und dem Auszugselement zusätzlich eine Abdeckung, wie beispielsweise ein Gitter oder ein Sichtfenster, angebracht wird, um einfach und zuverlässig den Zustand im Inneren der Zarge überprüfen zu können, ohne dass die Bienen gestört werden oder ohne dass eine Gefahr für eine Verletzung der Tiere durch Öffnen und Schließen der Öffen- bzw. Schließvorrichtung besteht.

Es erübrigt sich festzuhalten, dass eine derartige Magazinbeute mit sämtlichen Zusatzelementen, mit welchen üblicherweise Magazinbeuten auszustatten sind, wie beispielsweise entsprechende Abdeckungen und Wärmedämmungen, veränderbare Zargengrößen, um beispielsweise unterschiedlich große Honig- und Bruträume zur Verfügung zu stellen, Absperrgitter zur Trennung von Brut- und Honigräumen sowie beispielsweise Gitterböden und Schubladen für beispielsweise Varroosetherapie, zum Einsatz gelangen kann. Auch Absperrgitter sowie das Vorsehen von Innendeckeln, welche entsprechende Ausnehmungen für eine Bienenflucht aufweisen, oder von Futterdeckeln ist bei einer derartigen Magazinbeute jederzeit und ohne bauliche Veränderung der Beute gegenüber einer herkömmlichen Magazinbeute möglich, so dass mit der erfindungsgemäßen Magazinbeute sämtliche Vorteile bzw. Tätigkeiten der modernen Imkerei einfach und zuverlässig ausgeführt werden können.

Insbesondere betreffend Fütterungsmöglichkeiten im Bereich der Abdeckung der Magazinbeute kann mit der erfindungsgemäßen Zarge ein an sich bekannter Fütterungsaufstieg dahingehend weitergebildet werden, dass nicht nur lediglich ein Schlitz für den Aufstieg der Bienen zu dem Fütterungsdeckel zur Verfügung gestellt wird, sondern ein sogenannter Rundumaufstieg ausgebildet wird, wodurch sichergestellt wird, dass die Bienen auch bei nicht 100 % waagrecht stehender Magazinbeute sicher und zuverlässig an ihre im Deckelbereich angebrachte Fütterungsvorrichtung heran können. Darüber hinaus kann selbstverständlich eine derartige Futterstelle zusätzlich mit einem Gitter oder einer Glasscheibe zum Schutz der Tiere abgedeckt sein und auch gesondert für das Nachfüllen bzw. Überprüfen des Futters zugänglich sein.

Die Erfindung wird nachfolgend anhand von in der beiliegenden Zeichnung schematisch dargestellten Ausführungsbeispielen näher erläutert. In dieser zeigen:
Fig. 1 eine schematische Darstellung einer öffen- bzw. schließbaren Zarge einer Magazinbeute gemäß der Erfindung,
Fig. 2 die Zarge gemäß Fig. 1 mit geöffneter Öffen- bzw. Schließvorrichtung, wobei eine Seitenwand der Zarge doppelwandig ausgebildet ist,
Fig. 3 eine schematische Darstellung des Teils einer Zarge gemäß Fig. 1 mit herausgezogenem Auszugselement zum Einsatz im Warmbau, und
Fig. 4 eine schematische Darstellung lediglich des herausgezogenen Auszugselements zum Einsatz im Kaltbau.

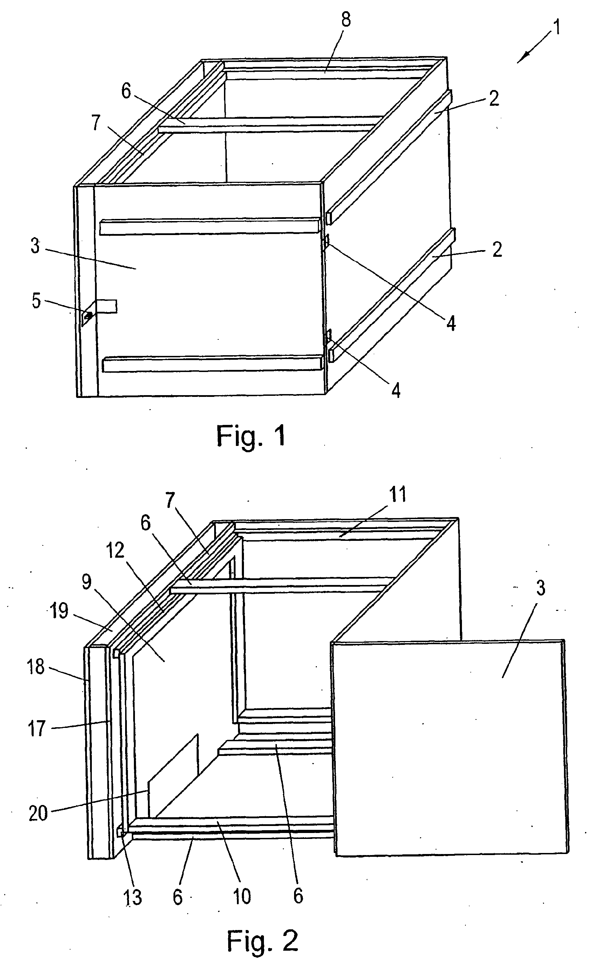

In Fig. 1 ist mit 1 schematisch eine Zarge einer Magazinbeute dargestellt, welche Zarge 1 insbesondere aus Holz gefertigt ist, jedoch aus beliebigen anderen Materialien hergestellt sein kann.

Die Zarge 1 weist an ihrem äußeren Umfang zwei rundherum verlaufende Griffleisten 2 auf, mit welchen Griffleisten 2 die Zarge 1 im Bedarfsfall von der Magazinbeute abgehoben bzw. auf diese aufgesetzt werden kann oder auch anderweitig transportiert werden kann. Es ist selbstverständlich, dass derartige Griffleisten 2 beispielsweise nur auf zwei Seiten der Zarge 1 vorgesehen sein können bzw. nur oben oder unten vorgesehen sein können. Darüber hinaus können anstatt der Griffleisten 2 auch Handgriffe jeder beliebigen Art an der Zarge 1 angebracht sein bzw. in diese versenkt sein.

Die Zarge 1 ist in der Darstellung gemäß Fig. 1 mit einer Öffen- bzw. Schließvorrichtung 3 in Form einer Türe ausgestattet, welche Öffen- bzw. Schließvorrichtung 3 über Scharniere 4 an der Zarge 1 angelenkt ist. Um einen sicheren Verschluss der Zarge zu gewährleisten, ist die Öffen- bzw. Schließvorrichtung 3 darüber hinaus mit einem Riegel 5 versehen, welcher beliebig ausgeführt sein kann. In der dargestellten Ausführungsform kann der Riegel 5 mit einem komplementären Element, welches an der Zarge 1 ausgebildet ist, zusammenwirken und gegebenenfalls auch mittels eines Schlosses versperrt werden, um beispielsweise einen Honigraub oder eine Beschädigung der Zarge 1 mit Sicherheit zu vermeiden.

Des Weiteren ist die Zarge 1 an ihrer Oberseite mit einer Versteifungsstrebe 6 ausgebildet, um die Formstabilität der Zarge 1 sicherzustellen und insbesondere sicherzustellen, dass die Zarge 1 im geöffneten Zustand sich nicht verzieht bzw. deformiert wird. Eine analoge Versteifungsstrebe 6 kann im Bodenbereich der Zarge 1 ausgebildet sein, wobei gemäß der vorliegenden Erfindung auch zwei oder mehrere Versteifungselemente bzw. -streben 6 vorgesehen sein können, welche auch unmittelbar hinter der Öffen- und Schließvorrichtung 3 in der Zarge 1 ausgebildet sein können.

Schließlich ist der Darstellung gemäß Fig. 1 an der Innenseite der Zarge 1 schematisch eine Führung 7 entnehmbar, in welche Führung 7 ein Auszugselement, welches in Fig. 1 nicht dargestellt ist, eingeschoben werden kann.

Darüber hinaus weist die Zarge 1 an ihrer der Öffen- und Schließvorrichtung 3 abgewandten Seite eine Auflagerleiste 8 auf, auf welcher Leiste 8 im eingeschobenen Zustand beispielsweise das Auszugselement aufliegen kann, um eine Raumstabilität insbesondere des Auszugselements, welches mit einem Rahmen versehen ist, zu gewährleisten.

In Fig. 2 ist wiederum schematisch eine Zarge 1 dargestellt, wobei zur Vereinfachung in der Darstellung in Fig. 2 jegliche Griffleisten 2 weggelassen sind. Darüber hinaus ist in Fig. 2 die Zarge 1 mit geöffneter Öffen- und Schließvorrichtung 3 dargestellt. In Abwandlung zu der Zarge 1 gemäß Fig. 1 weist die Zarge 1 gemäß Fig. 2 an ihrer Oberseite eine Verstreifungsstrebe 6 und an ihrer Unterseite zwei derartige Streben 6 auf, wobei insbesondere an der zu der Öffen- bzw. Schließvorrichtung 3 gewandten Vorderkante ebenfalls eine Verstrebung 6 vorgesehen ist, um die Stabilität der Zarge 1 mit Sicherheit zu gewährleisten.

Darüber hinaus ist die in der Zeichnung dargestellte, linke Seitenwand der Zarge 1 doppelwandig ausgebildet, wobei in den zwischen den Wandelementen 17 und 18 ausgebildeten Hohlraum 19 eine die Form eines Rahmens aufweisende Fütterungstasche eingehängt werden kann. Für einen ungehinderten Zugang der Bienen zu dem Futter aus der Fütterungstasche ist hiebei die Innenwand 17 der Zarge 1 so ausgebildet, dass über dem unteren Holm 13 eine Ausnehmung 20 ausgebildet ist, welche mit der Futterentnahmeöffnung in der Fütterungstasche übereinstimmt, so dass die Bienen jederzeit und zuverlässig das Futter aus der im Hohlraum 19 eingehängten bzw. eingeschobenen Fütterungstasche entnehmen können.

Im Inneren der Zarge 1 ist in Fig. 2 schematisch das Auszugselement 9 in seinem eingeschobenen Zustand dargestellt, wobei das Auszugselement 9 als trog- bzw. wannenförmiges Element ausgebildet ist, welches zusätzlich an seiner zu der Öffen- bzw. Schließvorrichtung 3 gewandten unteren Vorderkante 10 eine Querverstrebung aufweist und an seiner oberen von der Öffen- bzw. Schließvorrichtung 3 abgewandten Kante ebenfalls eine Querverstrebung 11 aufweist, um die Stabilität des trog- bzw. wannenförmigen Auszugselements zu erhöhen und insbesondere das Auszugselement 9 auch für den Kaltbau geeignet zu machen. Unter Kaltbau wird hiebei das Einschieben bzw. Einhängen der Rahmen in Einflugrichtung der Bienen in das Auszugselement 9 verstanden. Wenn die Rahmen in das Auszugselement 9 quer zur Einflugsrichtung der Bienen eingehängt werden, wie dies mit dem Auszugselement 9 gemäß Fig. 2 ebenfalls problemlos möglich ist, wird dies als Warmbau bezeichnet.

Das Auszugselement 9 kann hiebei wie in der Figur dargestellt, als wannen- bzw. trogförmiges Element ausgebildet sein, dessen Seitenwände und/oder Deckfläche offen ausgebildet sind.

Das Auszugselement 9 in der in Fig. 2 dargestellten Ausführungsform weist hiebei seine in die Führungen 7 eingeschobenen Holme bzw. Auflagerschienen 12 L-förmig ausgebildet auf, so dass auf der zum Inneren der Zarge 1 gerichteten L-förmigen Fläche die Rahmen, in welche die Bienenwaben aufgenommen werden, einhängbar sind. In gleicher Weise sind die unteren Holme bzw. Auflagerschienen 13 des wannen- bzw. trogförmigen Auszugselements 9 ebenso wie die Querverstrebungen 10 und 11 L-förmig ausgebildet, um entsprechende Auflageflächen für die in Fig. 2 nicht dargestellten Rahmen zur Verfügung zu stellen.

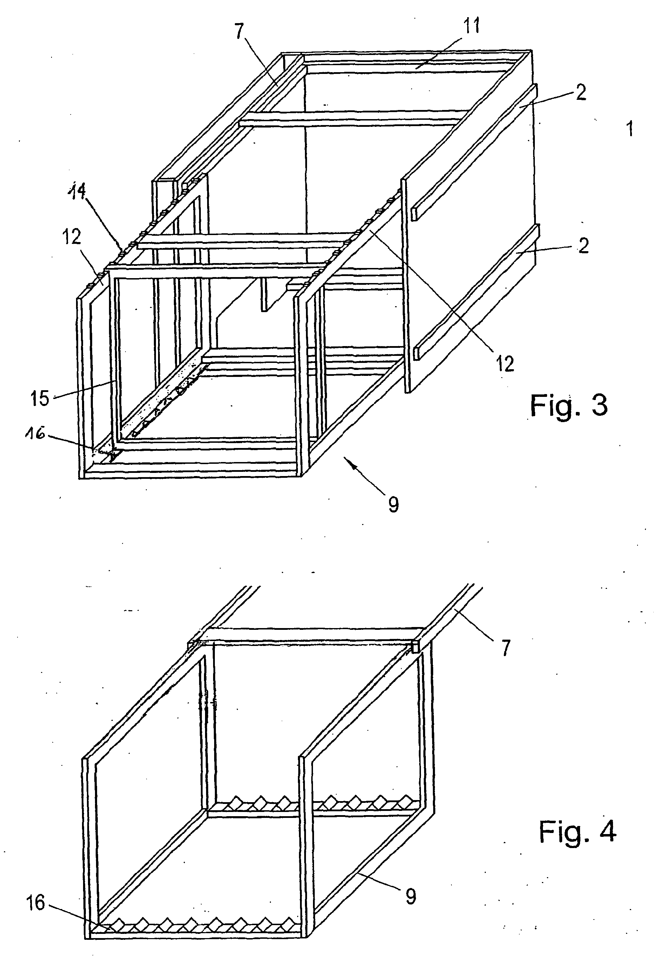

In Fig. 3 ist schematisch eine Zarge 1 gemäß Fig. 1 dargestellt, wobei zur Vereinfachung der Darstellung die Öffen- bzw. Schließvorrichtung 3 nicht dargestellt ist. Im oberen Bereich der Zarge 1 ist wiederum eine Griffleiste 2 angedeutet, mit welcher die Zarge 1 insgesamt bewegt werden kann.

In der in Fig. 3 dargestellten Ausführungsform ist das Auszugselement 9 entlang der Führungen 7 aus der Zarge 1 herausgezogen, dargestellt. Das Auszugselement 9 ist in der Darstellung gemäß Fig. 3 ebenfalls mit L-förmigen Auflagerschienen versehen ausgebildet, wobei ebenso wie in Fig. 2 lediglich die die Höhe des trog- bzw. wannenförmigen Auszugselements 9 bestimmenden Rahmenelemente als Viereckträger bzw. runde Stangen ausgebildet sind bzw. sein können. Die oberen Auflagerschienen 12 des trog- bzw. wannenförmigen Auszugelements 9 weisen bei der Darstellung gemäß Fig. 3 Anschlagelemente 14 auf, zwischen welche im Warmbau Rahmen 15 zur Aufnahme von Honigwaben einhängbar sind. In der dargestellten Ausführungsform ist der Rahmen 15 lediglich als leerer Rahmen eingehängt dargestellt. An den unteren Auflagerschienen 13 des trog- bzw. wannenförmigen Auszugselements 9 sind eine Mehrzahl von Erhebungen 16 dargestellt, welche in Richtung zum Inneren der Zarge 1 spitz zulaufen. Auf diesen Erhebungen bzw. Auflagern 16 ruht der Rahmen 15 mit seinen Unterkanten auf, so dass im Inneren der Zarge 1 an jeder Stelle, d.h. sowohl nach oben als auch nach unten als auch nach rechts oder links zu den Wänden der Zarge 1 der sogenannte Bienenabstand von 10 mm +/- 2 mm eingehalten ist. Durch ein derartiges Auflager 16 wird darüber hinaus sichergestellt, dass beim Herausziehen des wannen- bzw. trogförmigen Auszugselements 9 aus der Zarge 1 kein Verschwenken bzw. kein Verschieben der einzelnen Rahmenelemente 15 stattfindet, so dass auch zwischen den einzelnen Rahmenelementen 15 der Bienenabstand mit Sicherheit beibehalten wird und die Tiere in keiner Weise verletzt werden können.

Bei der Darstellung gemäß Fig. 3 kann (können) am oberen quer verlaufenden Holm 11 ein bzw. mehrere Abstandhalter 14 vorgesehen sein, um ein- und dasselbe trog- bzw. wannenförmige Auszugselement 9 auch in dem Kaltbau einsetzen zu können, und um den Rahmen 15 im Kaltbau einen sicheren Halt zu gewährleisten sind dafür auch an dem vorderen unteren Holm 10 des wannen- bzw. trogförmigen Auszugselements 9 Auflager 16 vorgesehen, auf welchen die untere vordere Kante des Rahmens 15 im Falle des Kaltbaus aufruht, so dass der Rahmen sicher und waagrecht in dem wannen- bzw. trogförmigen Auszugselement gehalten ist. Ein derartiger Einsatz des trog- bzw. wannenförmigen Auszugselements 9 für den Kaltbau ist hiebei in Fig. 4 dargestellt, wobei der Einfachheit halber in Fig. 4 lediglich das wannen- bzw. trogförmige Auszugselement sowie die Führungen 7 schematisch dargestellt sind.

Mit Rücksicht auf die Tatsache, dass bei der Magazinbeute gemäß der vorliegenden Erfindung sämtliche Abmessungen unter weiteren baulichen Ausführungen so beibehalten sind, wie sie herkömmlich in Magazinbeuten enthalten sind, ist es mit der erfindungsgemäßen Magazinbeute problemlos möglich, sämtliche weitere Zusatzeinrichtungen einer Magazinbeute unverändert an bzw. mit einer Zarge 1 gemäß der vorliegenden Erfindung zum Einsatz zu bringen.

Es sind hiebei das Bodenelement, das Abdeckelement, Dämmelemente, Gitter, Futtervorrichtungen, Fluchtlöcher und dgl. gemeint, welche vollständig unverändert bei einer Magazinbeute gemäß der vorliegenden Erfindung zum Einsatz gelangen können, so dass mit der Magazinbeute gemäß der vorliegenden Erfindung lediglich der immense Vorteil erzielt wird, dass der Imker nicht die schweren Magazinbeuten als Ganzes zu bewegen hat, sondern zu jedem Rahmen 15 einzeln durch Herausziehen des trog- bzw. wannenförmigen Auszugselements 9 von jeder Zarge 1 einfach und zuverlässig zugreifen kann, ohne dass dabei irgendwelche Nachteile für seine Bienenvölker entstehen würden.

## Patentansprüche

1. Magazinbeute mit mehreren übereinander anordenbaren, einen Brutraum und/oder Honigraum umgebenden, unten und oben offenen Zargen zur Aufnahme einer Mehrzahl von Rahmen sowie wenigstens einem Deckel und einem Boden mit einem darin angeordneten Flugloch, wobei die oben und unten offenen Zargen (1) an einer Seite öffen- oder schließbar (3) ausgebildet sind und im Inneren jeder Zarge (1) an beiden Seitenflächen jeweils wenigstens eine Führung (7) vorgesehen ist, welche jeweils wenigstens eine Führung (7) mit einem dazu komplementären Auszugselement (9), in welches die Rahmen (15) einhängbar sind, zusammenwirkt **dadurch gekennzeichnet, dass** das Auszugselement (9) im Wesentlichen trog- bzw. wannenförmig ausgebildet ist, dessen Seitenwände und/oder Deckfläche offen ausgebildet sind und dessen freie Oberkanten als mit in der Zarge (1) ausgebildeten Führungen (7) gleitend zusammenwirkende Auflagerschienen (12) ausgebildet sind, dass das Auszugselement (9) zusätzlich wenigstens an seiner der Öffen- und Schließvorrichtung (3) gegenüberliegenden Oberkante mit einem zum Inneren der Zarge (1) gerichteten, im Wesentlichen L-förmigen Versteifungs- bzw. Auflagerelement (11) versehen ist, dass auf den im Wesentlichen L-förmigen Auflagerelemente bzw. -schienen (11, 12) in regelmäßigen Abständen Abstandhalter (14) und/oder Anschlagelemente ausgebildet sind, und dass die Zarge (1), das Auszugselement (9) sowie die Mehrzahl von Rahmen im Bienenabstand zueinander angeordnet sind.

2. Magazinbeute nach Anspruch 1, **dadurch gekennzeichnet, dass** die oben und unten offenen Zargen (1) an ihrer dem Flugloch gegenüberliegenden Rückseite oder der dem Flugloch benachbarten Vorderseite öffen- und schließbar (3) ausgebildet sind.

3. Magazinbeute nach Anspruch 1 oder 2, **dadurch gekennzeichnet, dass** die jeweils wenigstens eine Führung (7) beidseitig im oberen Endbereich der Zarge (1), insbesondere in Abstand von 8 bis 30 mm von der Oberkante der Zarge, ausgebildet ist.

4. Magazinbeute nach Anspruch 1, 2 oder 3, **dadurch gekennzeichnet, dass** die mit den Führungen (7) gleitend zusammenwirkenden Oberkanten des Auszugselements (9) zum Inneren der Zarge (1) im Wesentlichen als L-förmige Auflagerschienen (12) ausgebildet sind.

5. Magazinbeute nach einem der Ansprüche 1 bis 4, **dadurch gekennzeichnet, dass** das im Wesentlichen L-förmige Versteifungs- bzw. Auflagerelement (11) an seiner zur Zarge (1) gerichteten Seite mit wenigstens einem sich waagrecht erstreckenden Fortsatz versehen ist, welcher Fortsatz in eine komplementäre Vertiefung in der Zarge (1) eingreift oder auf einem an der Innenseite der Zarge (1) ausgebildeten Halteelement aufliegt.

6. Magazinbeute nach einem der Ansprüche 1 bis 5, **dadurch gekennzeichnet, dass** die in dem im Wesentlichen trog- bzw. wannenförmigen Auszugselement (9) angeordneten, der Unterseite der Zarge (1) benachbarten Elemente (10, 13) als zum Inneren der Zarge gerichtete, im Wesentlichen L-förmige Elemente (13) ausgebildet sind.

7. Magazinbeute nach Anspruch 6, **dadurch gekennzeichnet, dass** an den der Unterseite der Zarge (1) benachbarten, im Wesentlichen L-förmigen Elementen (10, 13) in regelmäßigen Abständen jeweils nach oben gerichtete Auflager (16) ausgebildet sind.

8. Magazinbeute nach Anspruch 7, **dadurch gekennzeichnet, dass** die Auflager (16) als linienförmige Auflager, insbesondere Spitzen, ausgebildet sind.

9. Magazinbeute nach einem der Ansprüche 1 bis 8, **dadurch gekennzeichnet, dass** die Abstandhalter (14) der im oberen Bereich der Zarge (1) angeordneten Auflagerschienen bzw. -elemente (11, 12) und die linienförmigen Auflager (16) der der Unterseite der Zarge (1) benachbarten, im Wesentlichen L-förmigen Auflagerelemente (10, 13) versetzt zueinander, insbesondere jeweils um die Hälfte des Abstands von jeweils zwei Anschlag- (14) bzw. Auflagerflächen (16) versetzt zueinander, angeordnet sind.

10. Magazinbeute nach einem der Ansprüche 1 bis 9, **dadurch gekennzeichnet, dass** das im Wesentlichen trog- oder wannenförmige Auszugselement (9) lediglich an einer Oberkante und/oder an einer Unterkante mit einem quer verlaufenden Auflagerelement (10, 11) versehen ist.

11. Magazinbeute nach einem der Ansprüche 1 bis 10, **dadurch gekennzeichnet, dass** die der öffen- und schließbaren Seite (3) benachbarten Seitenwände der Zarge (1) doppelwandig ausgebildet sind und dass die zum Inneren der Zarge (1) gerichtete Wand (17) wenigstens eine insbesondere verschließbare Durchbrechung (20) aufweist.

12. Magazinbeute nach Anspruch 11, **dadurch gekennzeichnet, dass** in wenigstens einer der doppelwandig ausgebildeten Seitenwände eine in ihren Außenabmessungen einem Rahmen (15) entsprechende Futtertasche einsetzbar ist.

## Claims

1. A beehive including several superimposable, downwardly and upwardly open cases each defining a brood chamber and/or honey chamber and intended to receive a plurality of frames, and at least one cover, and a bottom with an entrance hole provided therein, wherein the upwardly and downwardly open cases (1) are each designed to be openable or closeable (3) on one side, and wherein, in the interior of each case (1), at least one guide (7) is each provided on the two lateral surfaces, which at least one guide (7) interacts with a complementary extraction element (9) in which the frames (15) are mountable, **characterized in that** the extraction element (9) is substantially trough-shaped or tub-shaped, whose side walls and/or cover surface are designed to be open, and whose free upper edges are configured as support rails (12) slidingly interacting with guides (7) formed in a case (1) , that the extraction element (9), at least on its upper edge located opposite the opening and closing device (3), is additionally provided with a substantially L-shaped stiffening or support element (11) oriented to the interior of the case (1), that spacers (14) and/or stop elements are formed on the substantially L-shaped support elements or rails (11, 12), and that the case (1), the extraction element (9) and the plurality of frames are mutually arranged at bee distance.

2. A beehive according to claim 1, **characterized in that** the upwardly and downwardly open cases (1) are designed to be openable and closeable (3) on their rear sides opposite the entrance holes, or on their front sides adjacent the entrance holes.

3. A beehive according to claim 1 or 2, **characterized in that** the at least one guide (7) is each formed on both sides in the upper end region of the case (1), in particular at a distance of 8 to 30 mm from the upper edge of the case.

4. A beehive according to claim 1, 2 or 3, **characterized in that** the upper edges slidingly interacting with the guides (7), of the extraction element (9) are configured as substantially L-shaped support rails (12) towards the interior of the case (1).

5. A beehive according to any one of claims 1 to 4, **characterized in that** the substantially L-shaped stiffening or support element (11), on its side facing the case (1), is provided with at least one horizontally extending projection, which projection engages a complementary depression provided in the case (1), or rests on a retaining element formed on the inner side of the case (1).

6. A beehive according to any one of claims 1 to 5, **characterized in that** the elements (10, 13) arranged in the substantially trough-shaped or tub-shaped extraction element (9) and adjacent the lower side of the case (1) are configured as substantially L-shaped elements (13) oriented to the interior of the case.

7. A beehive according to claim 6, **characterized in that** seats (16) each directed upwardly are formed at regular distances on the substantially L-shaped elements (10, 13) adjacent the lower side of the case (1).

8. A beehive according to claim 7, **characterized in that** the seats (16) are configured as linear seats, in particular tips.

9. A beehive according to any one of claims 1 to 8, **characterized in that** the spacers (14) of the support rails or elements (11, 12) arranged in the upper region of the case (1) and the linear seats (16) of the substantially L-shaped elements (10, 13) adjacent the lower side of the case (1) are arranged to be mutually offset, in particular each by half the distance of each of the two stop surfaces (14) or support surfaces (16), respectively.

10. A beehive according to any one of claims 1 to 9, **characterized in that** the substantially trough-shaped or tub-shaped extraction element (9) is provided with a transversely extending support element (10, 11) only on an upper edge and/or a lower edge.

11. A beehive according to any one of claims 1 to 10, **characterized in that** the side walls of the case (1) adjacent the openable and closeable side (3) are designed to be doublewalled, and that the wall (17) oriented to the interior of the case (1) comprises at least one, particularly closeable, passage (20).

12. A beehive according to claim 11, **characterized in that** a food pocket corresponding to a frame (15) in terms of its external dimensions is insertable in at least one of the doublewalled side walls.

## Revendications

1. Ruche, comprenant plusieurs corps superposables, qui entourent un espace de couvain et/ou un espace de miel, et sont ouverts en partie basse et en partie haute, pour recevoir une pluralité de cadres, ainsi qu'avec au moins un couvercle et un fond avec un trou de vol disposé dans ce dernier, les corps (1), ouverts en partie haute et en partie basse, étant réalisés sur un côté avec une possibilité d'ouverture ou de fermeture (3) et au moins une glissière (7) étant prévue sur chacune des deux faces latérales à l'intérieur de chaque corps (1), laquelle au moins une glissière (7) coopère avec un élément de retrait (9) complémentaire, dans lequel peuvent être accrochés les cadres (15), **caractérisée en ce que** l'élément de retrait (9) est réalisé essentiellement en forme d'auge et/ou de baquet, dont les parois latérales et/ou face de couverture ont une réalisation ouverte et dont les bords supérieurs libres sont réalisés sous forme de rails d'appui (12), qui coopèrent en glissement avec des glissières (7) réalisées dans le corps (1), que l'élément de retrait (9) est muni en supplément, au moins sur son bord supérieur opposé au dispositif d'ouverture et de fermeture (3), d'un élément de renforcement et/ou d'appui (11) essentiellement en L, dirigé vers l'intérieur du corps (1), que des écarteurs (14) et/ou éléments de butée sont réalisés à distances régulières sur les éléments et/ou rails d'appui (11, 12) essentiellement en L, et que le corps (1), l'élément de retrait (9), ainsi que la pluralité de cadres, sont disposés les uns par rapport aux autres dans l'espace abeille.

2. Ruche selon la revendication 1, **caractérisée en ce que** les corps (1), ouverts en partie haute et en partie basse, sont réalisés avec une possibilité d'ouverture et de fermeture (3) sur leur face arrière, opposée au trou de vol ou sur la face avant voisine du trou de vol.

3. Ruche selon l'une des revendications 1 et 2, **caractérisée en ce que** chaque glissière (7) est réalisée bilatéralement dans la zone d'extrémité supérieure du corps (1), en particulier à une distance de 8 à 30 mm du bord supérieur du corps.

4. Ruche selon l'une des revendications 1, 2 et 3, **caractérisée en ce que** les bords supérieurs de l'élément de retrait (9), qui coopèrent en glissement avec les glissières (7), sont réalisés vers l'intérieur du corps (1) essentiellement sous forme de rails d'appui (12) en L.

5. Ruche selon l'une des revendications 1 à 4, **caractérisée en ce que** l'élément de renforcement et/ou d'appui (11), essentiellement en L, est muni sur son côté dirigé vers le corps (1) d'au moins un prolongement s'étendant horizontalement, lequel prolongement s'engage dans un creux complémentaire du corps (1) ou s'applique sur un élément de retenue, réalisé sur le côté intérieur du corps (1).

6. Ruche selon l'une des revendications 1 à 5, **caractérisée en ce que** les éléments (10, 13), disposés dans l'élément de retrait (9) essentiellement en forme d'auge et/ou de baquet et voisins du côté inférieur du corps (1), sont réalisés sous forme d'éléments (13) essentiellement en L, dirigés vers l'intérieur du corps.

7. Ruche selon la revendication 6, **caractérisée en ce que** des supports (16), respectivement dirigés vers le haut, sont réalisés à distances régulières sur les éléments (10, 13) essentiellement en L, voisins du côté inférieur du corps (1).

8. Ruche selon la revendication 7, **caractérisée en ce que** les supports (16) sont réalisés sous forme de supports linéaires, en particulier de pointes.

9. Ruche selon l'une des revendications 1 à 8, **caractérisée en ce que** les écarteurs (14) des rails et/ou éléments d'appui (11), disposés dans la zone supérieure du corps (1), et les supports linéaires (16) des éléments d'appui (10, 13) essentiellement en L, voisins du côté inférieur du corps (1), sont disposés en déport mutuel, en particulier chacun de la moitié de l'écartement de respectivement deux faces de butée (14) et/ou faces d'appui (16).

10. Ruche selon l'une des revendications 1 à 9, **caractérisée en ce que** l'élément de retrait (9), essentiellement en forme d'auge ou de baquet, est muni uniquement sur son bord supérieur et/ou sur son bord inférieur d'un élément d'appui (10, 11) s'étendant transversalement.

11. Ruche selon l'une des revendications 1 à 10, **caractérisée en ce que** les parois latérales du corps (1), voisines du côté (3) doté d'une possibilité d'ouverture et de fermeture, ont une réalisation à double paroi, et que la paroi (17), dirigée vers l'intérieur du corps (1), présente au moins une percée (20) en particulier obturable.

12. Ruche selon la revendication 11, **caractérisée en ce qu'**une poche de nourriture, correspondante dans ses dimensions extérieures à un cadre (15), peut être mise en place dans au moins l'une des parois latérales à double paroi.
